# EUROPÄISCHE PATENTSCHRIFT

(11) **EP 1 301 361 B1**
(45) Veröffentlichungstag und Bekanntmachung des Hinweises auf die Patenterteilung: **03.01.2007**
(21) Anmeldenummer: 01923372.5
(22) Anmeldetag: 06.04.2001
(51) Int. Cl.: B60C 27/10, B60C 27/12

(54) **SPANNVORRICHTUNG FÜR EINE SCHNEEKETTE**
CLAMPING DEVICE FOR A SNOW CHAIN
DISPOSITIF DE SERRAGE D'UNE CHAINE ANTINEIGE

(30) Priorität: 10.04.2000 AT 6062000
(43) Veröffentlichungstag der Anmeldung: 16.04.2003
(73) Patentinhaber: PEWAG AUSTRIA GmbH, 8010 Graz (AT)
(72) Erfinder: PICHER, Thomas, A-8010 Graz (AT); BERTALANIC, Erwin, A-8605 Kapfenberg (AT)
(74) Vertreter: Matschnig, Franz
(86) Internationale Anmeldenummer: PCT/AT2001/000101
(87) Internationale Veröffentlichungsnummer: WO 2001/076895

(56) Entgegenhaltungen:
- DE-U- 29 703 911
- US-A- 2 455 878
- PATENT ABSTRACTS OF JAPAN vol. 1998, no. 01, 30. Januar 1998 (1998-01-30) & JP 09 254615 A (SOFT KYUKYU CORP:KK), 30. September 1997 (1997-09-30)

## Beschreibung

Die Erfindung betrifft eine Spannvorrichtung für eine Gleitschutzkette mit einem Gehäuse und einem Betätigungsglied, das eine Raststellung, in welcher ein durch eine Gehäuseöffnung in das Gehäuse hineinziehbarer Spannstrang entgegen seiner Spannrichtung blockierbar ist, sowie eine Freigabestellung aufweist, in welcher die Blockierung aufgehoben ist, und der Spannstrang innerhalb des Gehäuses an eine in Aufwickelrichtung vorgespannte Wickelrolle angeschlossen ist, die um ihre Achse drehbar gelagert ist, wobei an der Wickelrolle ein Klinkenkrad mit zumindest einer ihm zugeordneten, federbelasteten Sperrklinke vorgesehen ist.

Spannvorrichtungen werden bei Gleitschutzketten verwendet, um nach der Montage einen unerwünschten Rücklauf des Spannstranges entgegen der Spannrichtung zu vermeiden.

Eine derartige Spannvorrichtung wird in der DE 297 03 911 U1 vorgestellt. Bei dieser Spannvorrichtung ist ein Gehäuse vorgesehen, in welchem der Spannstrang auf eine Wickeltrommel aufgewickelt werden kann, die mit einem Klinkenrad drehfest verbunden ist. Die Wickeltrommel ist zum Aufwickeln des Spannstranges in der Aufwickelrichtung durch eine Feder vorgespannt. Das Aufwickeln des Spannstranges kann über einen außen am Gehäuse angebrachten Betätigungshebel ausgelöst werden. Nachteilig an dieser Vorrichtung ist die relativ unpraktische Handhabung des Betätigungshebels, der im Falle von Verschmutzung bzw. Vereisung auch leicht verklemmen kann. Überdies lässt sich die Länge des aus dem Gehäuse herausragenden Teils des Spannstranges nur schlecht justieren.

Es ist daher eine Aufgabe der Erfindung, eine Spannvorrichtung zu schaffen, die einfach zu handhaben ist und auch unter widrigen äußeren Bedingungen einen hohen Bedienungskomfort aufweist.

Diese Aufgabe wird mit einer Spannvorrichtung der eingangs genannten Art erfindungsgemäß dadurch gelöst, dass ein zweites Klinkenrad mit einer ihm zugeordneten federbelasteten Sperrklinke vorgesehen ist, und die beiden Klinkenräder miteinander drehfest verbunden sind, wobei die Sperrrichtungen der Klinkenräder gegenläufig sind und die federbelasteten Sperrklinken des ersten bzw. des zweiten Klinkenkrades mittels eines gemeinsamen Betätigungsgliedes wechselseitig in Eingriff mit den zugehörigen Klinkenrädern bringbar sind.

Es ist ein Verdienst der Erfindung, eine einfach aufgebaute und robuste Spannvorrichtung zu schaffen, die sich überdies durch einen hohen Bedienungskomfort auszeichnet, da der Spannstrang in seine beiden Bewegungsrichtungen abwechselnd blockiert und frei gegeben werden kann.

In einer günstigen Variante der Erfindung sind die beiden Sperrklinken bezüglich einer die Achse der Wickelrolle enthaltenden Ebene spiegelbildlich angeordnet.

In einer bevorzugten Ausführungsform weist das erste Klinkenrad einen größeren Durchmesser als das zweite Klinkenrad auf.

Die Herstellung lässt sich dadurch vereinfachen, dass die beiden Klinkenräder einstückig aus einem Spritzgussstück gefertigt sind.

Eine einfache Bedienbarkeit wird dadurch erreicht, dass das Betätigungsglied die Klinkenräder umgibt und die Sperrklinken außerhalb des Betätigungsgliedes gelagert sind, wobei das Betätigungsglied die Form eines abschnittsweise unterbrochenen, ein Eingreifen der Sperrklinken in die Klinkenräder ermöglichenden Zylindermantels aufweist.

Um das Betätigungsglied gut handhaben zu können, sind an der äußeren Oberfläche des zylinderförmigen Betätigungsgliedes einander gegenüberliegende, aus Ausnehmungen in dem das Betätigungsglied und die Sperrklinken umgebenden Gehäuse herausragende Fortsätze als Handhabe vorgesehen, die im wesentlichen radial zur Oberfläche des Zylindermantels verlaufen.

Die Bedienbarkeit des Betätigungsgliedes lässt sich weiter dadurch verbessern, dass es in dem Gehäuse um die Achse der Wickelrolle verdrehbar gelagert ist.

Um ein Blockieren und Freigeben der Klinkenräder zu ermöglichen, sind die Sperrklinken um zur Achse der Wickelrolle parallele Achsen verschwenkbar in dem Gehäuse gelagert sind.

Die Sperrklinken können dadurch leichter in ihre Blockierposition gebracht werden, dass im Lagerbereich jeder Sperrklinke im Gehäuse eine abschnittsweise in Ausnehmungen der Sperrklinken aufgenommene Feder vorgesehen ist.

Die Positionsveränderung der Sperrklinken wird dadurch erleichtert, dass die Sperrklinken an ihren dem Betätigungsglied zugewandten Seiten mit Abschnitten der äußeren Zylinderoberfläche des Betätigungsgliedes zusammenwirkende Auflaufflächen aufweisen, die bei einem Verdrehen des Betätigungsgliedes die Sperrklinken wechselweise gegen die jeweilige Feder außer Eingriff mit den Klinkenrädern bringen.

Sind Klinkenräder mit unterschiedlichen Radien vorgesehen, so ist es vorteilhaft, wenn die dem ersten im Durchmesser größeren Klinkenrad zugeordnete Sperrklinke auf ihrer Auflauffläche eine Erhöhung aufweist, die zur Schaffung einer genügend großen Distanz zwischen dem Klinkenrad und der Sperrklinke in der Freigabestellung dient.

Die Erfindung samt weiteren Vorteilen wird im folgenden anhand eines Ausführungsbeispiels näher erläutert, das in der Zeichnung veranschaulicht ist. In dieser zeigen
- Fig.1 eine erfindungsgemäße Spannvorrichtung in perspektivischer Ansicht;
- Fig. 2 eine erfindungsgemäße Spannvorrichtung in explodierter Darstellung;
- Fig. 3a - Fig. 3c einen Schnitt entlang der Linie III-III in Fig. 1 in Draufsicht mit unterschiedlichen Stellungen des Betätigungsgliedes;
- Fig. 4 eine Sperrklinke in perspektivischer Ansicht;
- Fig. 5 eine weitere Sperrklinke in perspektivischer Ansicht.

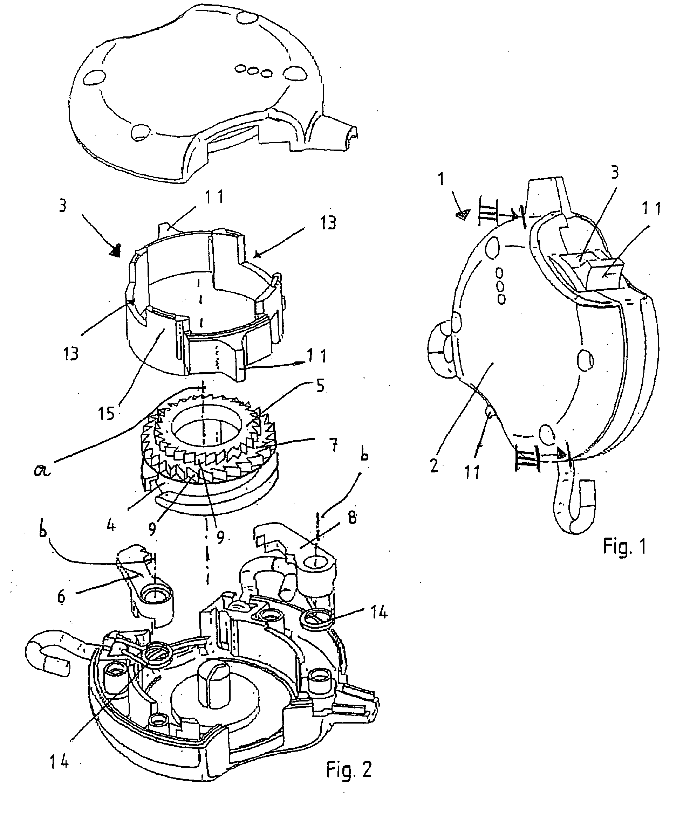

Gemäß Fig. 1 weist eine erfindungsgemäße Spannvorrichtung 1 ein Gehäuse 2 mit einem darin verschwenkbar gelagerten Betätigungsglied 3 auf. An gegenüberliegenden Stellen des Gehäuses 2 sind Öffnungen für Fortsätze 11 des Betätigungsgliedes 3 vorgesehen. Mithilfe dieser Fortsätze 11 kann das Betätigungsglied 3 gegen das Gehäuse 2 verschwenkt werden. Die Funktion des Betätigungsgliedes 3 besteht darin, einen Spannstrang, der zum Spannen einer Gleitschutzkette verwendet werden kann, je nach Bedarf in eine gewünschte Richtung auf Zug frei zu geben und gleichzeitig in die entgegengesetzte Richtung zu blockieren.

Zur Blockade eines Spannstranges in eine Richtung bei gleichzeitiger Freigabe des Spannstranges in die andere Richtung sind nach Fig. 2 zwei Klinkenräder 5, 7 vorgesehen, in die jeweils eine Sperrklinke 6, 8 eingreifen kann. Um unterschiedliche Sperrrichtungen der Klinkenräder 5, 7 zu erhalten weisen sie gegenläufig geneigte Auflaufflanken 9 auf. Die Federn 14 dienen dazu, die Sperrklinken 6, 8 in eine Position zu bringen, in der sie das dazugehörige Klinkenrad 5, 7 blockieren. Um den Spannstrang, der aus darstellerischen Gründen nicht gezeigt ist, im Gehäuse 2 aufzurollen, ist eine Wickelrolle 4 vorgesehen, die mit den Klinkenrädern 5, 7 starr verbunden und in Aufwickelrichtung durch eine hier nicht dargestellte Feder vorgespannt ist. Zur Führung des Spannstranges ist auf der Wickelrolle 4 ein gewindeförmiges Oberflächenprofil vorgesehen.

Das Betätigungsglied 3 umgibt die Klinkenräder 5, 7, wobei jede Sperrklinke 6, 8 außerhalb des Betätigungsgliedes 3 um eine Achse b, die parallel zur Achse a der Wickelrolle 4 verläuft, im Gehäuse 2 drehbar gelagert ist.

Um das Verdrehen des Betätigungsgliedes 3 zu erleichtern, ist dieses im wesentlichen in Form eines an seinen Deckflächen offenen Zylinders ausgebildet und um die Achse a der Wickelrolle 4 drehbar gelagert, wobei an dem Zylindermantel Ausnehmungen 13 vorgesehen sind, um ein Eingreifen der Sperrklinken 6, 8 in die Klinkenräder 5, 7 zu ermöglichen.

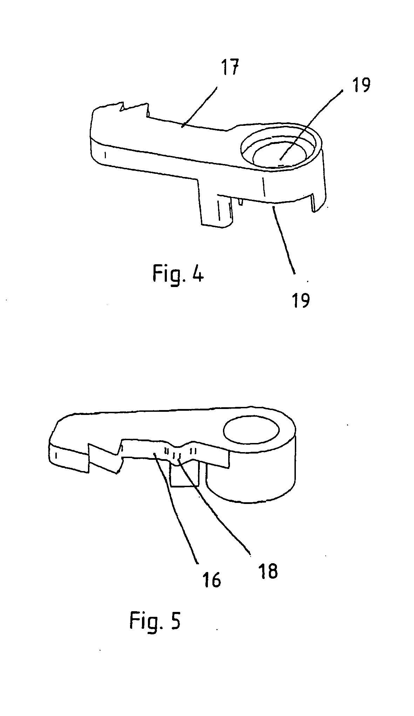

Durch ein Verdrehen des Betätigungsgliedes 3 gegenüber dem Gehäuse 1 werden Teile der Zylinderummantelung 15 des Betätigungsgliedes 3 gegen die in Fig. 4 und Fig. 5 dargestellten Auflaufflächen 16, 17 der Sperrklinken 6, 8 verschoben, wodurch diese von Federn 4 wechselweise in das dazugehörige Klinkenrad 5, 7 gedrückt werden können. Zur abschnittsweisen Aufnahme der Federn 4 weisen die Sperrklinken 6, 8 in Fig. 4 und Fig. 5 dargestellte Ausnehmungen 19 auf.

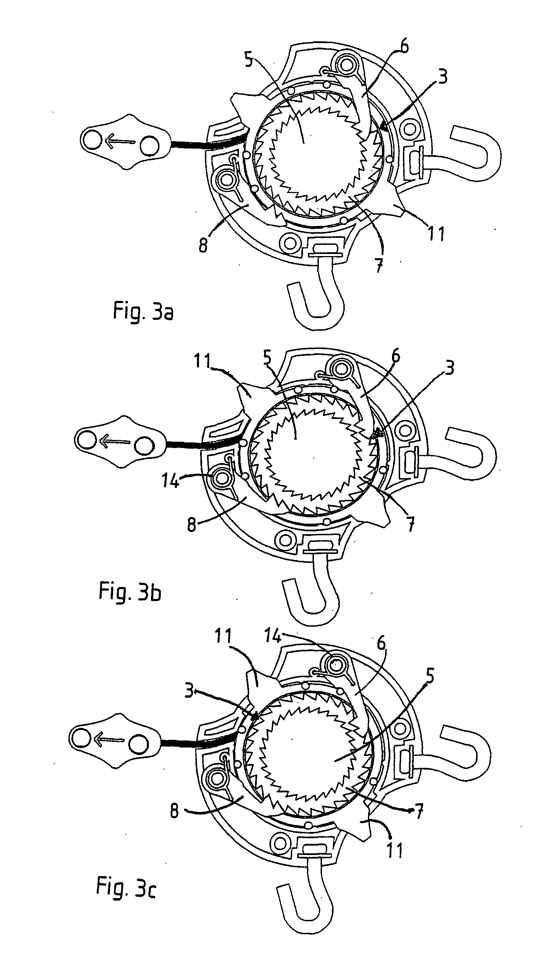

Wie aus Fig. 3a-3c ersichtlich, weist die Spannvorrichtung 1 zwei Klinkenkräder 5, 7 mit unterschiedlichen Durchmessern auf. Diese Ausführungsform zeichnet sich dadurch aus, dass sie besonders einfach herzustellen ist.

Die Sperrklinke 8, die in das größere Klinkenrad 7 eingreift weist, wie in Fig. 5 dargestellt, an ihrer Auflauffläche eine Erhöhung 18 auf. Der Grund dieser Maßnahme besteht darin, die wegen des größeren Radius des Klinkenrades 7 verringerte Distanz zur Sperrklinke 8 in ihrer Freigabeposition, wie in Fig. 3a dargestellt, ausreichend groß zu machen. Wegen des geringeren Weges, den diese Sperrklinke 8 im Vergleich zur Sperrklinke 6 des kleineren Klinkenrades 5 zurücklegen muss, um das entsprechende Klinkenrad 7 zu blockieren, kann auch die Gesamtlänge dieser Sperrklinke 8 etwas geringer sein als die der anderen Sperrklinke 6.

## Patentansprüche

1. Spannvorrichtung (1) für eine Gleitschutzkette mit einem Gehäuse (2) und einem Betätigungsglied (3), das eine Raststellung, in welcher ein durch eine Gehäuseöffnung in das Gehäuse (2) hineinziehbarer Spannstrang entgegen seiner Spannrichtung blockierbar ist, sowie eine Freigabestellung aufweist, in welcher die Blockierung aufgehoben ist, und der Spannstrang innerhalb des Gehäuses an eine in Aufwickelrichtung vorgespannte Wickelrolle (4) angeschlossen ist, die um ihre Achse (a) drehbar gelagert ist, wobei an der Wickelrolle (4)ein Klinkenkrad (5) mit zumindest einer ihm zugeordneten, federbelasteten Sperrklinke (6) vorgesehen ist, **dadurch gekennzeichnet, dass** ein zweites Klinkenrad (7) mit einer ihm zugeordneten federbelasteten Sperrklinke (8) vorgesehen ist und die beiden Klinkenräder (5, 7) miteinander drehfest verbunden sind, wobei die Sperrrichtungen der Klinkenräder (5,7) gegenläufig sind und die federbelasteten Sperrklinken (6, 8) des ersten bzw. des zweiten Klinkenkrades (5, 7) mittels eines gemeinsamen Betätigungsgliedes (3) wechselseitig in Eingriff mit den zugehörigen Klinkenrädern bringbar sind.

2. Spannvorrichtung nach Anspruch 1, **dadurch gekennzeichnet, dass** die beiden Sperrklinken (6, 8) bezüglich einer die Achse (a) der Wickelrolle (4) enthaltenden Ebene spiegelbildlich angeordnet sind.

3. Spannvorrichtung nach Anspruch 1 oder 2, **dadurch gekennzeichnet, dass** das erste Klinkenrad (7) einen größeren Durchmesser als das zweite Klinkenrad (5) aufweist.

4. Spannvorrichtung nach einem der Ansprüche 1 bis 3, **dadurch gekennzeichnet, dass** die beiden Klinkenräder (5, 7) einstückig aus einem Spritzgussstück gefertigt sind.

5. Spannvorrichtung nach Anspruch 1 bis 4, **dadurch gekennzeichnet, dass** das Betätigungsglied (3) die Klinkenräder (5, 7) umgibt und die Sperrklinken (6, 8) außerhalb des Betätigungsgliedes (3) gelagert sind, wobei das Betätigungsglied (3) die Form eines abschnittsweise unterbrochenen, ein Eingreifen der Sperrklinken (6, 8) in die Klinkenräder (5, 7) ermöglichenden Zylindermantels aufweist.

6. Spannvorrichtung nach einem der Ansprüche 1 bis 5, **dadurch gekennzeichnet, dass** an der äußeren Oberfläche des zylinderförmigen Betätigungsgliedes (3) einander gegenüberliegende, aus Ausnehmungen in dem das Betätigungsglied (3) und die Sperrklinken (6, 8) umgebenden Gehäuse (2) herausragende Fortsätze (11) als Handhabe vorgesehen sind, die im wesentlichen radial zur Oberfläche des Zylindermantels verlaufen.

7. Spannvorrichtung nach einem der Ansprüche 1 bis 6, **dadurch gekennzeichnet, dass** das Betätigungsglied (3) in dem Gehäuse (2) um die Achse (a) der Wickelrolle (4) verdrehbar gelagert ist.

8. Spannvorrichtung nach einem der Ansprüche 1 bis 7, **dadurch gekennzeichnet, dass** die Sperrklinken (6, 8) um zur Achse (a) der Wickelrolle (4) parallele Achsen (b) verschwenkbar in dem Gehäuse (2) gelagert sind.

9. Spannvorrichtung nach Anspruch 8, **dadurch gekennzeichnet, dass** im Lagerbereich jeder Sperrklinke (6, 8) im Gehäuse (2) eine abschnittsweise in Ausnehmungen (19) der Sperrklinken (6, 8) aufgenommene Feder (14) vorgesehen ist.

10. Spannvorrichtung nach einem der Ansprüche 1 bis 9, **dadurch gekennzeichnet, dass** die Sperrklinken (6, 8) an ihren dem Betätigungsglied (3) zugewandten Seiten mit Abschnitten der äußeren Zylinderoberfläche des Betätigungsgliedes (3) zusammenwirkende Auflaufflächen (16,17) aufweisen, die bei einem Verdrehen des Betätigungsgliedes (3) die Sperrklinken (6, 8) wechselweise gegen die jeweilige Feder (14) außer Eingriff mit den Klinkenrädern (5, 7) bringen.

11. Spannvorrichtung nach Anspruch 10, **dadurch gekennzeichnet, dass** die dem ersten im Durchmesser größeren Klinkenrad (7) zugeordnete Sperrklinke (8) auf ihrer Auflauffläche (16) eine Erhöhung (18) aufweist, die zur Schaffung einer genügend großen Distanz zwischen dem Klinkenrad (7) und der Sperrklinke (8) in der Freigabestellung dient.

## Claims

1. A tensioning device (1) for a non skid chain with a casing (2) and an actuator (3), which has a locking position, in which a tension cord that can be drawn into the casing (2) through an opening in the casing contrary to its direction of pull can be locked in position, and a release position, in which said lock is cancelled, and the tension cord is connected within the housing to a winding roll (4) biased in its winding direction, which winding roll is mounted for rotation about its axis (a), and a ratchet wheel (5) having at least one spring-loaded locking pawl (6) assigned thereto is provided on the winding roll (4), **characterized in that** a second ratchet wheel (7) having a spring-loaded locking pawl (8) assigned thereto is provided, and the two ratchet wheels (5, 7) are non-rotatably interconnected, the locking directions of said ratchet wheels (5, 7) being counterrotating, and said spring-loaded locking pawls (6, 8) of said first and second ratchet wheels (5, 7) respectively can be alternately moved so as to engage the assigned ratchet wheels by means of a common actuator (3).

2. A tensioning device as defined in claim 1, **characterized in that** the two locking pawls (6, 8) are mirror-symmetrically disposed with reference to a plane containing an axis (a) of said winding roll (4).

3. A tensioning device as defined in claim 1 or claim 2, **characterized in that** said first ratchet wheel (7) has a greater diameter than said second ratchet wheel (5).

4. A tensioning device as defined in any one of claims 1 to 3, **characterized in that** the two ratchet wheels (5.7) are manufactured as a single unit from a die cast.

5. A tensioning device as defined in any one of claims 1 to 4, **characterized in that** said actuator (3) surrounds said ratchet wheels (5, 7) and said locking pawls (6, 8) are mounted outside said actuator (3), said actuator (3) being in the form of a partially discontinuous cylinder barrel enabling engagement of said locking pawls (6, 8) in said ratchet wheels (5, 7).

6. A tensioning device as defined in any one of claims 1 to 5, **characterized in that** on the external surface of said cylindrical actuator (3) there are provided oppositely located extensions (11) projecting through recesses in said casing (2) surrounding said actuator (3) and said locking pawls (6, 8), which extensions serve as grips extending substantially radially to the surface of said cylinder barrel.

7. A tensioning device as defined in any one of claims 1 to 6, **characterized in that** said actuator (3) is mounted in said casing (2) for rotation about the axis (a) of said winding roll (4).

8. A tensioning device as defined in any one of claims 1 to 7, **characterized in that** said locking pawls (6, 8) are mounted in said casing (2) for rotation about axes (b) parallel to said axis (a) of said winding roll (4).

9. A tensioning device as defined in claim 8, **characterized in that** in the region of the bearings of each locking pawl (6, 8) there is provided, within said casing (2), a spring (14) which is partially accommodated in recesses (19) in said locking pawls (6, 8).

10. A tensioning device as defined in any one of claims 1 to 9, **characterized in that** said locking pawls (6, 8) have sloping surfaces (16, 17) at their sides facing said actuator (3) which cooperate with regions of the external cylindrical surface of said actuator (3) and which, when said actuator (3) is turned, alternately disengage said locking pawls (6, 8) from said ratchet wheels (5, 7) contrary to the force of the respective spring (14).

11. A tensioning device as defined in claim 10, **characterized in that** said locking pawl (8) assigned to the first ratchet wheel (7) of larger diameter exhibits an elevation (18) on its sloping surface (16), which elevation serves to create a sufficiently large distance between said ratchet wheel (7) and said locking pawl (8) in the release position.

## Revendications

1. Dispositif de serrage (1) d'une chaîne antidérapante qui comporte un boîtier (2) et un élément de commande (3) présentant une position de verrouillage dans laquelle une courroie de serrage que l'on peut tirer vers l'intérieur du boîtier (2) à travers une ouverture ménagée dans ce dernier peut être bloquée dans le sens opposé à son sens de serrage, et présentant également une position de relâchement dans laquelle le blocage est supprimé et la courroie de serrage est raccordée à l'intérieur du boîtier à un rouleau d'enroulement (4) précontraint dans le sens de l'enroulement et logé de façon à pouvoir pivoter sur son axe (a), une roue à rochet (5) étant prévue au niveau du rouleau d'enroulement (4) avec au moins un cliquet (6) à ressort affecté à cette dernière ; **caractérisé en ce qu'**une seconde roue à rochet (7) est prévue avec un cliquet (8) à ressort affecté à cette dernière, et les deux roues à rochet (5, 7) sont reliées solidairement en rotation l'une à l'autre, le verrouillage des roues à rochet (5, 7) fonctionnant en sens contraire, et les cliquets (6, 8) à ressort de la première ou de la seconde roue à rochet (5, 7) pouvant être mis alternativement en prise avec les roues à rochet correspondantes à l'aide d'un élément de commande (3) commun.

2. Dispositif de serrage selon la revendication 1, **caractérisé en ce que** les deux cliquets (6, 8) sont agencés de manière spéculaire par rapport à un plan contenant l'axe (a) du rouleau d'enroulement (4).

3. Dispositif de serrage selon la revendication 1 ou 2, **caractérisé en ce que** la première roue à rochet (7) présente un plus grand diamètre que la seconde roue à rochet (5).

4. Dispositif de serrage selon l'une quelconque des revendications 1 à 3, **caractérisé en ce que** les deux roues à rochet (5, 7) sont réalisées d'un seul tenant, à partir d'une pièce moulée par injection.

5. Dispositif de serrage selon l'une quelconque des revendications 1 à 4, **caractérisé en ce que** l'élément de commande (3) entoure les roues à rochet (5, 7) et les cliquets (6, 8) sont logés à l'extérieur de l'élément de commande (3), ledit élément de commande (3) ayant la forme d'une enveloppe cylindrique partiellement interrompue, qui permet l'engrènement des cliquets (6, 8) avec les roues à rochet (5, 7).

6. Dispositif de serrage selon l'une quelconque des revendications 1 à 5, **caractérisé en ce que** sont prévus en guise de poignée, au niveau de la surface extérieure de l'élément de commande (3) de forme cylindrique, des prolongements (11) agencés à l'opposé l'un de l'autre, qui font saillie hors d'évidements pratiqués dans le boîtier (2) entourant l'élément de commande (3) et les cliquets (6, 8), et se déplacent suivant un plan essentiellement radial par rapport à la surface de l'enveloppe du cylindre.

7. Dispositif de serrage selon l'une quelconque des revendications 1 à 6, **caractérisé en ce que** l'élément de commande (3) est logé dans le boîtier (2) de façon à ce qu'il puisse pivoter autour de l'axe (a) du rouleau d'enroulement (4).

8. Dispositif de serrage selon l'une quelconque des revendications 1 à 7, **caractérisé en ce que** les cliquets (6, 8) sont logés dans le boîtier (2) de façon à pouvoir pivoter autour d'axes (b) parallèles à l'axe (a) du rouleau d'enroulement (4).

9. Dispositif de serrage selon la revendication 8, **caractérisé en ce qu'**est prévu, au niveau de la zone d'ancrage de chaque cliquet (6, 8) dans le boîtier (2), un ressort (14) logé partiellement dans des évidements (19) des cliquets (6, 8).

10. Dispositif de serrage selon l'une quelconque des revendications 1 à 9, **caractérisé en ce que** les cliquets (6, 8) présentent, au niveau de leur côté orienté vers l'élément de commande (3), des surfaces inclinées (16, 17) fonctionnant en interaction avec des sections de la surface extérieure de l'élément de commande (3) de forme cylindrique, lesdites surfaces inclinées amenant les cliquets (6, 8), lorsque l'on fait pivoter l'élément de commande (3), à se désolidariser alternativement des roues à rochet (5, 7) par un mouvement contraire à la force du ressort (14) correspondant.

11. Dispositif de serrage selon la revendication 10, **caractérisé en ce que** le cliquet (8) affecté à la première roue à rochet (7), de plus grand diamètre, présente au niveau de sa surface inclinée (16) une saillie (18) permettant, en position de relâchement, de créer une distance suffisamment grande entre la roue à rochet (7) et le cliquet (8).
